# DEMANDE DE BREVET EUROPEEN

(11) **EP 0 147 252 A1**
(43) Date de publication de la demande: **03.07.1985**
(21) Numéro de dépôt: 84402135.2
(22) Date de dépôt: 24.10.1984
(51) Int. Cl.: C09K 11/79, C09K 11/84, C09K 11/78, C09K 11/81, C09K 11/85, G06K 19/08

(54) **Nouvelle composition destinée au marquage de documents et procédé de vérification de l'authenticité de ces documents**

(30) Priorité: 02.11.1983 FR 8317389
(71) Demandeur: RHONE-POULENC CHIMIE, 92408 Courbevoie Cédex (FR)
(72) Inventeur: Maestro, Patrick, F-95470 - Fosses (FR); Dougier, Patrick, F-78470 - Andresy (FR)
(74) Mandataire: Dutruc-Rosset, Marie-Claude

(57) **Abrégé**

La présente invention a pour objet une nouvelle composition destinée au marquage de documents. Elle concerne également le procède de vérification de l'authenticité dudit document.

La composition de l'invention est caractérisée par le fait qu'elle comprend:
- une substance luminescente (A) susceptible, lorsqu'elle est excitée par un rayonnement de longueur d'onde inférieure à 400 nm, d'émettre une radiation ayant une longueur d'onde comprise entre 400 et 800 nm et
- une substance luminescente dite anti-stokes (B) susceptible, lorsqu'elle est excitee par un rayonnement de longueur d'onde superieure à 800 nm, d'emettre une radiation ayant une longueur d'onde comprise entre 400 et 800 nm.

La vérification de l'authenticité du document peut se faire selon une detection visuelle ou photométrique.

## Description

La présente invention a pour objet une nouvelle composition destinée au marquage de documents. Elle concerne également le procédé de vérification de l'authenticité dudit document.

Le repérage par des moyens mécaniques rapides d'informations codées sur des "documents" a pris une importance croissante dans ces dernières années en rapport avec l'automatisation largement répandue de certaines opérations courantes telles que :
- identification,
- classement et tri,
- contrôle et prévention de la contrefaçon, falsification ou autres.

Le terme "document" désigne ici un certain nombre de pièces constituées de divers supports que l'on peut regrouper en différentes catégories :
. des papiers : en particulier à caractère fiduciaire (billets de banque, chèques, timbres postes, etc...)
. des matériaux plastiques : cartes de crédit, titres de transport, étiquettes, etc...
. autres matériaux notamment photographies etc...ou tout autre objet nécessitant un signe distinctif.
Cette liste ne présente aucun caractère limitatif.

On a proposé toute une gamme de solutions au problème que pose la vérification de l'authenticité d'un document.

C'est ainsi que l'on a préconisé le marquage du document au moyen d'isotopes radio-actifs, au moyen de substances traceuses non radioactives qui, sous irradiation neutronique absorbent partiellement la radiation (brevet français 2 096 209). Lesdites substances présentent l'avantage d'être très difficiles à se procurer si bien que la contrefaçon apparaît impossible. Cependant la mise en oeuvre de substances radio-actives est soumise à une réglementation sévère et ne trouve pas grâce aux yeux du grand public.

On connait également de nombreux procédés de marquage au moyen de substances à fluorescence ultraviolette. On peut citer, entre autres, le brevet français 1 471 367 qui décrit la mise en oeuvre de composés organiques présentant une photoluminescence notable tels que des complexes d'ions de métaux de terres rares avec au moins un ligand chélatant comme, par exemple, une β-dicétone. De telles substances luminescentes présentent l'inconvénient de n'être pas très stables au stockage, thermiquement et vis-à-vis du rayonnement ultraviolet.

Compte-tenu de la nécessité de trouver toujours de nouvelles solutions au marquage afin d'éviter les risques de contrefaçon et de falsification, la demanderesse était à la recherche d'un procédé permettant de remédier aux inconvénients précités et exploitant le phénomène de luminescence tout en satisfaisant aux impératifs suivants :
- excitation sélective
- émission spécifique
- simplicité et reliabilité du dispositif d'ensemble excitation-détection.

La présente invention fournit une solution au marquage des documents à l'aide de substances luminescentes répondant aux exigences précitées.

Il a maintenant été trouvé et c'est ce qui constitue.l'un des objets de l'invention une composition destinée au marquage des documents caractérisée par le fait qu'elle comprend :
- une substance luminescente (A) susceptibles lorsqu'elle est excitée par un rayonnement de longueur d'onde inférieure à 400 nm, d'émettre une radiation ayant une longueur d'onde comprise entre 400 et 800 nm et
- une substance luminescente dite anti-stokes (B) susceptible, lorsqu'elle est excitée par un rayonnement de longueur d'onde supérieure à 800 nm, d'émettre une radiation ayant une longueur d'onde comprise entre 400 et 800 nm.

Intervient donc dans la composition de l'invention une substance luminescente anti-stokes (B) qui est une substance qui excitée par un rayonnement de grande longueur d'onde, par exemple des rayons infra-rouges, émet alors un rayonnement à plus courte longueur d'cnde notamment des rayons visibles. Les radiations émises sont alors décalées vers les courtes longueurs d'onde et ces substances sont alors dénommées "substances luminescentes anti-stokes" par opposition à la plupart des substances luminescentes, parni lesquelles on choisit la substance (A), qui suivent la loi de Stokes c'est-à-dire que les radiations émises sont décalées vers les grandes longueurs d'onde par rapport aux radiations absorbées.

Le principe de marquage de l'invention consiste à associer deux substances luminescentes qui, étant excitées l'une par un rayonnement de courte longueur d'onde tel que un rayonnement ultraviolet, un rayonnement électronique ou des rayons X et l'autre par un rayonnement de grande longueur d'onde située entre 800 et 1200 nm, présentent toutes deux un spectre d'émission dans le visible c'est-à-dire entre 400 et 800 nm.

Les substances luminescentes intervenant dans la composition de l'invention doivent émettre chacune un spectre d'émission dans la même région du spectre électromagnétique et présenter un spectre étroit c'est-à-dire qu'il doit être défini par un intervalle de longueur d'onde inférieur à 50 nm et, de préférence inférieur à 30 nm.

D'une manière préférentielle, on choisit deux substances luminescentes qui émettent une ou plusieurs raies fines dans la même région étroite du spectre électromagnétique-Encore plus préférentiellement, on met en oeuvre dans la composition de l'invention deux substances luminescentes qui présentent au moins une raie d'émission : ces raies d'émission peuvent se situer à la même longueur d'onde ou à une longueur d'onde voisine lors d'une détection visuelle ou dans un intervalle d'au moins 0,5 nm afin qu'elles soient discriminées dans le cas d'une détection photométrique.

Dans la mesure où les substances luminescentes possèdent le profil indiqué précédemment, on peut choisir n'importe quelle substance luminescente (A) ou (B) existant sur le marché.

Comme exemples de substances luminescentes convenant bien aux fins de l'invention, on peut citer les composés à base de terres rares. En effet en mettant en oeuvre les terres rares au sein de substances luminescentes, on obtient des raies d'émission très caractéristiques dues au fait que les émissions des ions terres rares proviennent de transitions électroniques au sein de la couche 4 f qui est une couche interne protégée par les couches périphériques 6 s et 5 d pleines si bien que la couche 4 f est peu sensible aux effets de l'environnement dans lequel est situé l'ion terre rare mis en oeuvre comme centre luminescent.

Conformément à l'invention, on met en oeuvre dans la composition destinée au marquage une substance luminescente .(A) émettant dans une couleur telle que bleu, vert, rouge sous excitation à l'aide d'une radiation de longueur d'onde inférieure à 400 nm avec une substance luminescente anti-stokes (B) émettant dans la même couleur sous excitation à l'aide d'un rayonnement infra-rouge.

A titre d'exemples de substances luminescentes émettant dans le bleu c'est-à-dire entre environ 410 et 480 nm, on peut utiliser les substances luminescentes à base d'europium divalent émettant dans le bleu et notamment celles qui répondent à la formule : 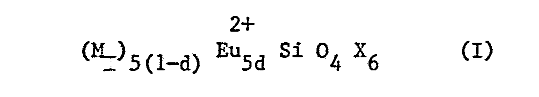 dans laquelle :
- ^{M}_{I} représente Ba₁₋ₑ ^{Sr} ₑ ou Ba₁₋ₑ Caₑ, e étant supérieur ou égal à 0 et inférieur ou égal à environ 0,1,
- d est supérieur à 0 et inférieur ou égal à environ 0,2,
- X représente Cl_{l-f} Br_{f} ; f étant supérieur ou égal à 0 et inférieur ou égal à environ 1.

Parmi les substances de formule (I), celles qui conviennent plus particulièrement à l'invention sont celles qui sont caractérisées par d compris entre 0,003 et 0,03 et e compris entre 0 et 0,05.

Des substances luminescentes particulièrement préférées sont telles que e = 0 et d = 0,02 ce qui correspond à la formule :

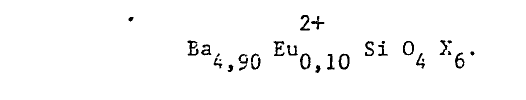

Les substances répondant à la formule (I) étant des produits connus, on ne décrira pas leur procédé de préparation qui est mentionné dans le brevet français 2 432 039.

La caractéristique desdites substances est de se distinguer par une faible largeur de la bande d'émission dans. le bleu vers 440 nm et par une intensité élevée de cette dernière. De plus, elles présentent l'avantage de pouvoir être excitées sur un grand domaine de longueurs d'onde : c'est ainsi qu'elles peuvent être exitées aussi bien par le rayonnement de lampes à vapeur de mercure basse pression (raie principale à 253,7 nm) que par le rayonnement de lampes à vapeur de mercure haute pression (raie principale à 365 nn) ou encore par un rayonnement X.

Bien que les substances luminescentes répondant à la formule (I) soient les composés préférés à mettre en oeuvre en tant que substance luminescente (A) émettant dans le bleu, on peut également employer des oxysulfures de terres rares actives au terbium ou au thulium qui répondent à la formule (II) : 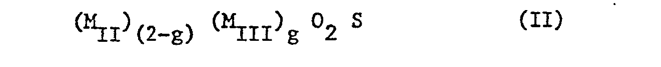 dans ladite formule :
- M_{Il} est au moins un élément du groupe comprenant l'yttrium, le lanthane, le gadolinium et le lutécium,
- M_{III} représente le terbium ou le thulium
- g est compris entre 0,0002 et 0,02

Le choix du métal M_{II} n'a qu'un effet mineur sur la couleur du matériau luminescent.

Comme exemples de substances luminescentes émettant dans le bleu, on peut citer Y_{1,99} Tb_{0,01} O₂ ^{S ,} et Y_{1,998} Tb_{0,002} O₂ ^{S} avec une raie principale d'émission à 418 nm ou un matériau tel que Y_{1,94} Tm_{0,06} O₂ S émettant principalement vers 459 nm.

La préparation de ces oxysulfures de terres rares est décrite dans la littérature (cf brevet français 1 473 531 et brevet anglais 1 163 503).

Comme autres substances luminescentes émettant dans le bleu, on peut utiliser les produits du commerce notamment Ba F Cl activé à l'europium, La 0 Br active au thulium (La 0 Br; 0,003 Tm) ou au terbium (La 0 Br : 0,002 Tb) ; ces différents composés émettent dans le bleu sous excitation aux rayons X.

Pour ce qui est des substances luminescentes susceptibles d'émettre dans le vert c'est-à-dire entre 535 et 560 nm, on peut mettre en oeuvre un borate double de magnésium et de terres rares répondant à la formule (III) : 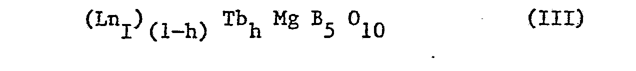 dans laquelle Ln_{I} représente au moins un élément pris dans le groupe constitué par les lanthanides et l'yttrium et dans laquelle h est supérieur à 0 et inférieur ou égal à 1.

D'une manière préférentielle, on choisit h compris entre 0,15 et 0,80.

Un groupe particulièrement intéressant de composés de formule (III) sont ceux qui répondent à la formule (III') : 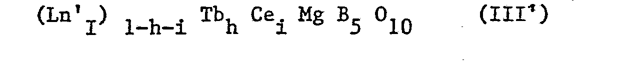 où Ln'_{I} représente au moins un élément pris dans le groupe constitué par le lanthane, le gadolinium, le lutécium et l'yttrium et dans laquelle h est supérieur à 0 et inférieur ou égal à 1 et, de préférence compris entre 0,15 et 0,80 et i est supérieur à 0 et inférieur ou égal à 1 et, de préférence compris entre 0,10 et 0,85.

Comme exemples de borates doubles de magnésium et de terres rares, on peut citer T^{b} M^{g} B₅ O₁₀ ; La0,3 Tb_{0,7} ^{Mg} B₅ O₁₀; Ce_{0,7} Tb_{0,3} Mg B5010 ; La_{0,30} Ce_{0,30} Tb_{0,40} ^{Mg B}₅ O₁₀.

Sous un rayonnement d'excitation variant entre 100 et 400 nm, les substances luminescentes de formule (III) et (III') présentent une émission verte très intense vers 538 nm.

Pour ce qui est du mode d'obtention desdits composés, on se reportera au brevet français 2 485 507.

Comme autre classe de substance luminescente (A) émettant dans le vert, on peut citer les phosphates de métaux alcalins et de terres rares dont la définition et la préparation sont décrites dans le brevet français 2 391 260.

Les substances luminescentes préférées correspondent à la formule générale (IV) : 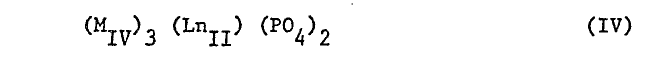 dans laquelle :
m_{IV} est au moins l'un des éléments choisi parmi le groupe constitué par le sodium, le potassium, le rubidium et le césium ;
Ln_{II} est au moins l'un des éléments choisi parmi le groupe constitué par le cérium et le terbium.

Excitées par des rayons ultraviolets, les substances de formule (IV) activées à l'aide de terbium présentent l'émission caractéristique du terbium. La répartition spectrale du rayonnement émis par lesdites substances est constituée par plusieurs pics d'émission aigus dont le pic, le plus intense est situé à environ 545 nm avec une largeur de pic à mi-hauteur d'environ 10 nm. A titre d'exemples, on peut citer Na₃₋ₖ Kₖ La₁₋ⱼ Tbⱼ (^{P0}₄)₂ et Na₃₋ₖ Kₖ Gd₁₋ⱼ Tb. (PO₄)₂ avec k compris entre 0 et 3 et j compris entre 0 et 1 et plus précisément les substances ^{Na}₃ La_{O350} Tb0,50 (^{P0}₄)₂ et Na₃ Gd_{0,50} Tb0,50 (^{P0}₄)₂.

Les substances répondant à la formule IV activées simultanément à l'aide de cérium et de terbium présentent sous excitation ultraviolette un pic d'émission très intense vers 545 nm et des pics d'émission secondaires plus faibles. Lesdits composés répondent plus spécifiquement à la formule (IV') : 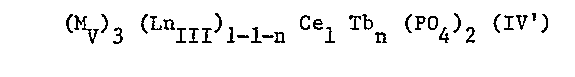 dans laquelle
M_{V} représente le sodium, le potassium, le rubidium ou un mélange d'entre eux
Ln_{III} représente l'yttrium, le lanthane, le gadolinium 1 + n étant compris entre 0 et 1.
Parmi les composés de formule (IV'), on peut citer : Na₃ Ce_{0,70} Tb₀,₃₀ (P0₄)₂ ; Na₃ La _{0,1} Ce _{0,5} Tb _{0,4} (^{P0}₄)₂ ^{;} Na_{2,7} K_{0,3} Ce _{0,60} Tb _{0,40} (PO₄)₂ ^{; Na}₃ Y_{0,1} Ce_{0,6} Tb_{0,3} (PO₄)₂ ; Na₃ Gd_{0,1} Ce_{0,6} Tb_{0,3} (PO₄)₂ ; ^{Rb}₃ Ce_{0,65} Tb0,35 (P0₄)₂ ^{;} K₃ Ce_{0,65} Tb_{0,35} (P0₄)_{2.}

A titre de substances luminescentes (A), on peut faire appel aux thiogallates de métaux alcalino-terreux activés à l'europium divalent décrits dans le brevet français 2 054 602 et plus preférentiellement à ceux qui font l'objet du brevet français 2 444 073 et qui répondent à la formule générale : 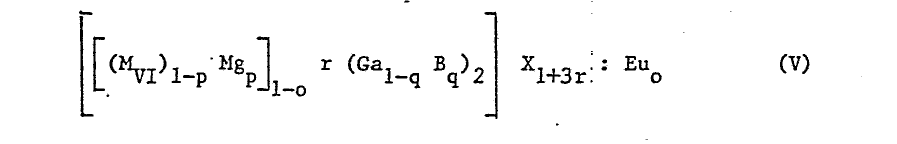 dans laquelle
M_{VI} représente au moins un élément alcalino-terreux choisi parmi le groupe comprenant le calcium, le strontium et le baryum
p est supérieur ou égal à 0 et inférieur ou égal à 0,7 environ r est supérieur ou égal à 0,8 environ et est différent de 1 quand p = 0
q est supérieur ou égal à 0 et inférieur à p.
X représente le soufre ou un mélange de soufre et d'oxygène
o est un nombre choisi de manière à produire la luminescence recherchée quand la substance luminescente est soumise à une énergie incidente excitatrice.

Les substances luminescentes choisies préférentiellement sont celles définies par la formule (V) telle que :
p est supérieur ou égal à environ 0,10 et inférieur ou égal à environ 0,50
r = 1
^{q =} P
et o est compris entre 0,005 et environ 0,20.

L'émission verte sous excitation cathodique ou ultraviolette correspond à un composé de formule (V) où le métal M représente le strontium et le baryum dans la proportion de 80 % de strontium et 20 % de baryum.

La formule suivante illustre un tel composé :

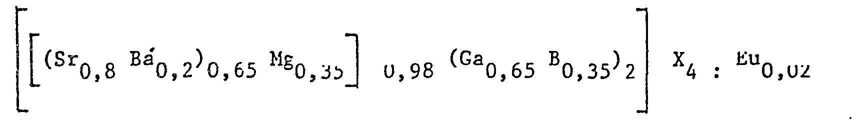

Conviennent également comme substances luminescentes emettant dans le vert, ies oxysulfures de terres rares activés au terbium définis par la formule (VI) : 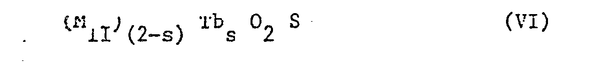 dans laquelle :
M_{II} est au moins un elément du groupe comprenant l'yttrium, le lanthane, le gadolinium et le lutécium
s est compris entre 0,02 et 0,2
Par exemple, les composés Y_{1,98} Tb_{0,02} O₂S et Y_{1,9/} Tb_{0,03} 0₂ S présentent une raie principale d'émission vers 546 nm.

A la place de ces substances luminescentes émettant dans le vert dont la liste donnée n'est pas limitative, on peut mettre en oeuvre dans la composition de marquage de l'invention, une substance luminescente dont le spectre d'émission se situe dans le rouge entre 600 et 630 nm.

On cognait également des oxysulfures de terres rares qui émettent dans le rouge et qui sont définis par la formule (VII) : 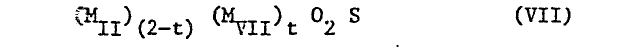 dans laquelle :
M_{II} est au moins un élément pris dans le groupe comprenant l'yttrium, le lanthane, le gadolinium et le lutécium M_{VII} représente l'europium ou le samarium trivalent
t est compris entre 0,0002 et 0,2 pour le samarium et entre 0,005 et 0,5 pour l'europium.

Comme composés illustrant ce type de formule, on peut citer :
- Y₁,₉₀ Eu_{0,10} O₂S ; Y_{1,94} Eu_{0,06} O₂ S ; Gd_{1,94} Eu_{0,06} 0₂ S qui sous excitation cathodique ou ultraviolette, présentent une raie principale d'émission à 626 nm
- 1,94 Sm_{0,06} O₂ ^{S} et Gd_{1,98} Sm_{0,02} O₂ S qui ^{p}ossëdent une émission d'une intensité maximum à 607 nm.

On se référera au brevet français 1 473 531 pour la préparation des oxysulfures de terres rares.

La substance luminescente (A) peut également être constituée par les oxydes de terres rares activés à l'europium trivalent et répondant à la formule (VIII) : 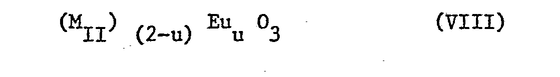 dans laquelle :
M_{II} représente au moins l'un des éléments : yttrium, lanthane, gadolinium ou lutécium,
u est compris entre 0,0002 et 0,2.

Les oxydes de terres rares sont des produits connus et décrits notamment dans le brevet français 2 166 055 auquel on pourra se reporter pour leur préparation.

Les substances luminescentes de formule (VIII) fournissent une émission très efficace de raies dans la partie rouge du spectre visible.

Enfin conviennent également comme substances luminescentes
(A) les vanadates de terres rares de formule (IX) : 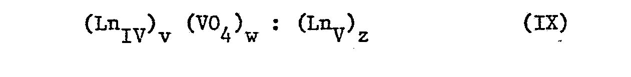 dans laquelle :
   Ln_{IV} représente l'yttrium, le lanthane, le gadolinium ou leur mélange
   Ln_{V} représente l'europium trivalent éventuellement en mélange avec une autre terre rare trivalente choisie dans le groupe formé par : le cérium, le praséodyme, le néodyme, le samarium, le gadolinium, le terbium, le dysprosium, l'holmium, l'erbium, le thulium, l'ytterbium et le lutécium v + z.= w ; z varie de 0,01 à 0,2 mole par mole de vanadate.

Les composés de formule (IX) sont également des produits décrits dans l'état de la technique, par exemple dans le brevet américain 3 322 682.

La substance luminescente (A) pourra être choisie dans la liste sans caractère limitatif définie ci-dessus en relation avec la couleur d'émission de l'autre substance luminescente anti-stokes (B) intervenant également dans la composition destinée au marquage des documents.

On précisera que d'une manière préférentielle, on choisit ladite substance (A) comme étant :
- un borate double de magnésium et de terres rares de formule (III) ou (III')
- un phosphate de métaux alcalins et de terres rares de formule (IV) ou (IV')

En ce qui concerne la nature de la substance luminescente anti-stokes (B), on peut faire appel à toute substance qui excitée par un rayonnement infra-rouge possède la propriété d'émettre des radiations dans le domaine du visible c'est-à-dire entre 400 et 800 nm.

Dans une telle substance, il y a présence d'un ion activateur constituant le centre luminescent et d'un ion sensibilisateur apte à absorber la majeure partie de l'énergie du rayonnement excitateur : lesdits ions étant inclus dans une matrice ou réseau hôte.

D'une manière schématique, on peut décomposer le mécanisme de l'effet anti-stokes en plusieurs étapes :
- absorption du rayonnement infra-rouge par un ion sensibilisateur,
- désexcitation de l'ion sensibilisateur et transfert d'énergie sur un ion activateur,
- désexcitation d'un autre ion sensibilisateur et transfert d'énergie sur l'ion activateur déjà excité,
- désexcitation radiative de l'ion activateur doublement excité se traduisant par une émission d'une radiation (généralement
visible) de longueur d'onde environ 2 fois plus faible que celle du rayonnement infra-rouge excitateur.

Pour que la substance luminescente (B) présente le phénomène de luminescence anti-stokes, elle renfermera l'ytterbium utilisé en tant qu'ion sensibilisateur car il présente un pic d'absorbtion à 930 nm, longueur d'onde située dans la partie infra-rouge du spectre électromagnétique et l'erbium, l'holmium ou le thulium comme ions activateurs. La couleur d'émission dépend de la structure d'accueil et des ions activateurs considérés.

Dans l'exposé qui suit de l'invention, on cite les substances luminescentes (B) convenant à l'invention en les classant selon leur nature chimique et non pas selon la couleur d'émission comme dans le cas des substances luminescentes (A). On précisera que la substance est à réponse d'une certaine couleur lorsque, excitée par un rayonnement infra-rouge, elle émet un spectre dont la raie principale se situe dans le domaine des longueurs d'onde correspondant à ladite couleur.

En tant que substance luminescente (B), on peut faire appel à des compositions à réponse verte constituées de tungstate double de métal alcalin et d'ytterbium dopé par un tungstate double d'un métal alcalin et d'erbium ou à des compositions à réponse bleue formées d'un tungstate double d'un métal alcalin et d'ytterbium faiblement dopé par un tungstate double d'un métal alcalin et de thulium. De telles compositions sont décrites dans le brevet français 1 532 609.

On peut utiliser comme substance à réponse verte, des oxychlorures d'yttrium (YOC1, Y3 OCl₇) dopés par de l'ytterbium et de l'erbium au sujet desquels on pourra se reporter à l'article de VAN UITERT et al, "Applied Physics Letters", pages 53 et 54 (1969).

Les substances luminescentes à matrice fluorure conviennent tout à fait bien aux fins de l'invention.

C'est ainsi que l'on peut faire appel à des fluorures des terres rares répondant à la formule (X) : 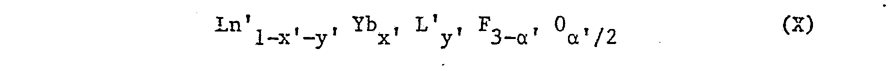 dans laquelle :
Ln' est l'un des métaux suivants : yttrium, lanthane, lutécium ou gadolinium
L' est l'un des ions activateurs : erbium, holmium, thulium x' est compris entre 0,04 et 0,40
y' est compris entre 0,001 et 0,10.
a' est compris entre 0 et 3.

Comme formules spécifiques, on peut citer :
- La_{0,86} Yb_{0,12} Er_{0,02}F₃
- La0,7985 Yb0,20 Tm0,0015 ^{F}3
- Gd_{0,5985} Yb_{0,40} Tm_{0,0015} F₃

La substance luminescente répondant à la formule (X) aura une réponse verte, lorsque l'ion activateur est l'erbium ou l'holmium, et bleue lorsque l'ion activateur est le thulium.

Tous les composés répondant à la formule (X) sont connus et l'on pourra se reporter au brevet américain 3 541 018 qui décrit un procédé permettant de les obtenir.

On peut également utiliser des fluorures mixtes de deux métaux différents qui sont décrits par le brevet français 2 107 248 et qui répondent à la formule (XI) : 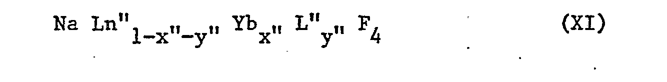 dans laquelle :
Ln" représente au moins l'yttrium, le lanthane, le lutécium ou le gadolinium
L" est l'un des éléments erbium, holmium ou thulium
x" varie entre 0,02 et 0,60
y" varie entre 0,00005 et 0,20.

Comme autres fluorures, on peut mettre en oeuvre des fluorures mixtes de baryum et d'yttrium Ba Y F₅, de, baryum et de lanthane Ba La F₅ dopés par l'ytterbium et l'erbium ou l'holmium (pour une réponse verte) et le thulium (pour une réponse bleue).

Lesdits composés font également partie de l'état de la technique (cf brevet français 2 077 731).

Enfin la nouvelle substance luminescente définie ci-après constitue en tant que substance luminescente anti-stokes (B), une matière première de choix.

Ladite substance est caractérisée par le fait qu'elle est un composé ternaire dont la composition peut être représentée à l'intérieur du diagramme de phase ternaire A, B, C dans lequel :
A représente un fluorure, un oxyde ou un oxyfluorure mixte de terres rares symbolisé par la formule Ln F₃₋ₐ 0 _{α/2} dans laquelle :
   . α est supérieur ou égal à 0 et inférieur ou égal à 3
   . Ln représente :
      - au moins un élément terre rare TR choisi dans le groupe formé par l'yttrium, le lanthane, le cérium, le gadolinium, le lutécium, le thorium
      - et l'ytterbium
      - et un élément L choisi dans le groupe formé par l'erbium, l'holmium et le thulium
      B représente le fluorure de baryum C représente un fluorure de métal alcalino-terreux de formule Ca_{1-β} Sr F₂ dans laquelle B est supérieur ou égal à 0 et inférieur ou égal à 1. ledit composé étant représenté dans le diagramme par la formule (A)ₐ (B)_{b} (C)_{c} dans laquelle a, b, c sont des nombres positifs quelconques tels que l'on conserve les propriétés de luminescence anti-stokes de ces substances.

Interviennent dans le fluorure, l'oxyde ou l'oxyfluorure mixte de terres rares, une terre rare TR inactive en termes de luminescence dont la caractéristique est de posséder une couche périphérique 4f possédant 0, 7 ou 14 électrons ; l'ytterbium en tant qu'ion sensibilisateur et un ion activateur tel que l'erbium, l'holmium ou le thulium pour lequel le double transfert d'énergie provenant de l'ytterbium est possible, se traduisant, après désexcitation de l'ion, par des raies d'emission situées dans les régions verte et rouge du spectre-électromagnétique pour l'erbium et l'holmium et bleue pour le thulium.

Un groupe particulièrement intéressant de substances luminescentes anti-stokes susceptibles d'être utilisées dans les compositions de marquage de l'invention est constitué par les composés dans lesquels, B est le fluorure de baryum, C le fluorure de calcium et A est un fluorure mixte d'yttrium, d'ytterbium et d' erbium : ce dernier pouvant être remplacé par l'holmium ou le thulium.

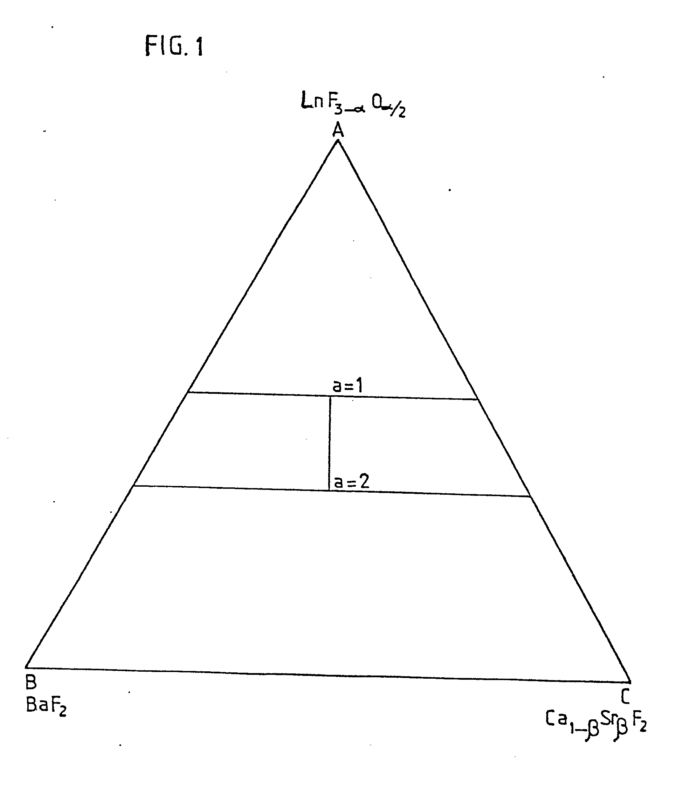

Le diagramme de phase ternaire A, B, C qui est représenté à la figure 1 est un triangle équilatéral dont les sommets sont A, B, C. Tous les composés formés à partir des fluorures A, B, C ont des formules qui peuvent être représentées par un point à l'intérieur du diagramme. Ainsi un composé ou un mélange de composés peut être représenté par la formule (A) a (B)_{b} (C) c dans laquelle a, b, c sont des nombres quelconques positifs qui conviennent dans la mesure où l'on conserve les propriétés de conversion d'un rayonnement infra-rouge en radiation visible.

Dans la formule précitée, a est supérieur ou égal à 1 et inférieur ou égal à 2 ; b et c étant supérieurs à 0 et inférieurs à 2 et leur somme b + c est égale à 2.

Les substances luminescentes à utiliser préférentiellement correspondent à a supérieur ou égal à 1 et inférieur ou égal à 2 ; b et c étant égaux à 1.

En ce qui concerne la composition de la phase A du diagramme ternaire A, B, C, on peut dire qu'elle peut être symbolisée par la formule suivante : 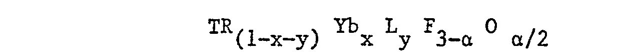 dans laquelle x est supérieur à 0 et inférieur à 0,5 et y est supérieur à 0 et inférieur ou égal à 0,1 ; y doit être inférieur à x ; a est supérieur ou égal à 0 et inférieur ou égal à 3.

Les valeurs préférentielles de x sont comprises entre 0,1 et 0,2 et pour y entre 0,02 et 0,04 : a étant supérieur ou égal à 0 et inférieur ou égal à 3.

Encore plus préférentiellement, on choisit a égal à 0.

Les substances luminescentes anti-stokes ont une composition qui vient d'être définie par le diagramme ternaire. Un groupe préféré desdites substances peut être représenté par la formule générale : 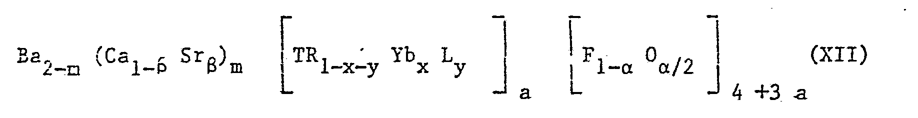 dans laquelle :
- m est supérieur à 0 et inférieur à 2.
- α est supérieur ou égal à 0 et inférieur ou égal à 3.
- β est supérieur ou égal à 0 et inférieur ou égal à 1.
- a est supérieur ou égal à 1 et inférieur ou égal à 2.
- x est supérieur à 0 et inférieur à 0,5
- y est supérieur ou égal à 0 et inférieur ou égal à 0,1 :
y étant inférieur à x :
- TR, L ayant la signification donnée précédemment.

Les substances luminescentes de formule (XII) ont une composition qui est délimitée sur le diagramme ternaire représenté par la figure 1, par les deux traits parallèles indiqués sur ledit diagramme.

Les composés de formule (XII) encore plus préférentiels sont ceux qui répondent à la formule (XII) dans laquelle a = 1 et a = 2. Leur composition est définie sur le diagramme ternaire par les 2 points qui résultent de l'intersection de la perpendiculaire avec les deux traits parallèles.

Les substances luminescentes répondant à la formule (XII), ont une structure cristalline qui s'indexe dans deux structures connues dans la littérature. L'analyse radiocristallographique met en évidence que lesdites substances présentent une phase isotype de Y K Yb₃ F₁₀ (fiche J.C.P.D.S. 27 462), ou une phase isotype de K Y₂ F₇ (fiche J.C.F.D.S. 27 464) ou bien un mélange de ces deux phases.

Dans le cas des composés préférentiels définis par la formule (XII) dans laquelle a varie entre 1 et 2, on remarque que la structure cristalline desdits composés est définie lorsque a est égal à 2 comme une structure de type y K Yb₃ F₁₀ et quand a devient inférieur à 2, on aboutit à un mélange d'une phase isotype de γ K Yb₃ F₁₀ et d'une phase isotype de K Y₂ F₇.

On note que l'intensité d'émission des substances de l'invention semble dépendre étroitement de la présence de l'une ou l'autre de ces phases.

On pense que la structure type K Y₂ F7 s'avère un meilleur réseau hôte pour la luminescence anti-stokes que la structure γ K Yb₃ F₁₀ car l'intensité d'émission augmente avec la proportion de la phase K _{Y2} ^{F7}

Les substances luminescentes anti-stokes définies par le diagramme de phase ternaire A, B, C représenté par la figure 1 se préparent selon des procédés généraux qui ont déjà été décrits dans la littérature. On peut les obtenir par réaction à l'état solide comme à l'état liquide. En effet ces substances sont thermiquement très stables et on peut sans inconvénient dépasser de plus de 300°C leur température de fusion.

Un des modes de préparation desdites substances luminescentes est de partir des fluorures des différents métaux alcalino-terreux et de terres rares qui sont ensuite soumis à un traitement thermique.

Il est préférable que les fluorures mis en jeu présentent une grande pureté, de préférence supérieure à 99 % afin de ne pas introduire d'impuretés dans la substance luminescente obtenue.

Avant calcination, on cherchera avantageusement à obtenir un mélange de fluorures aussi intime que possible.

On fait subir au mélange des fluorures concernés un traitement thermique à une température qui varie entre 700°C et 1300°C et de préférence entre 700°C et 1000°C à pression atmosphérique ou sous pression réduite pouvant atteindre 10⁻² mm de mercure.

La durée du traitement thermique est fonction de la capacité de l'appareillage et de son aptitude à monter rapidement en température. Généralement, une fois la température souhaitée atteinte, on la maintient pendant une durée variable d'environ 5 minutes à 15 heures.

Selon les conditions du traitement thermique en obtient une substance luminescente dont la composition est représentée à l'intérieur du diagramme ternaire par (A)ₐ (B)_{b} (C)_{c} où A symbolise la phase Ln F_{3-α} 0 _{α/2} dans laquelle a peut être égal à .0 ou supérieur à 0.

Afin d'obtenir un composé ne contenant que des fluorures donc c = 0, on propose d'effectuer ledit traitement thermique sous atmosphère saturée en ions fluorure à l'aide d'un courant gazeux d'acide fluorhydrique.

Une autre variante de réalisation du traitement thermique consiste à l'effectuer sous pression atmosphérique mais en atmosphère de gaz inerte. C'est ainsi que l'on assure un balayage de gaz inertes : gaz rares notamment l'argon. Il est souhaitable de soumettre le gaz rare à un traitement de déshydratation et de désoxygénation réalisé selon les techniques usuelles, par exemple, par passage au travers d'un tamis moléculaire.

On maintient l'atmosphère inerte tout au cours du traitement thermique.

Une variante préférée de l'opération de traitement thermique consiste à chauffer les fluorures sous atmosphère de gaz inertes nais en présence d'un agent de fluoration dénommé flux.dont la décomposition thermique provoque la saturation de l'atmosphère en ions fluorure.

Dans ce but, on réalise un mélange intime desdits fluorures avec un flux tel que, par exemple, le dihydrogénofluorure d'ammonium ou le fluorure d'ammonium.

La quantité dudit flux peut représenter de 5 à 50 % du poids des fluorures.

Après mélange intime des deux composés cités, on réalise le traitement thermique en chauffant vers une température de 200°C à 300°C, de préférence vers 250°C puis en maintenant ladite température pendant, par exemple, 1 à 2 heures afin de décomposer le flux et de saturer l'atmosphère en ions fluorure puis l'on poursuit le chauffage à la température et pendant la durée précédemment indiquées.

Enfin pour préparer un composé oxyfluorë c'est-à-dire un composé dans lequel a est supérieur à 0 au sein de la phase A, on préconise d'effectuer le traitement thermique à l'air en présence d'un flux tel que précité.

Dans ce cas, il est également souhaitable de maintenir le palier thermique entre 200°C et 300°C avant d'atteindre une température supérieure à 700°C.

A la fin du traitement thermique, on laisse le produit calciné refroidir, sous atmosphère de gaz inerte lorsque l'on ne désire pas obtenir d'oxyfluorures.

Une des méthodes préférées de préparation desdites substances luminescentes anti-stokes consiste à les obtenir par coprécipitation des fluorures à partir des solutions de sels des métaux concernés, par exemple, en milieu aqueux, puis par calcination dudit coprécipité.

Comme matières premières de départ, on peut utiliser les oxydes des métaux concernés ou des composés organiques ou minéraux susceptibles de former des fluorures par action de l'acide fluorhydrique comme les acétates, les nitrates, les chlorures, les carbonates, etc...

La forme sous laquelle se trouvent lesdits composés est indifférente puisqu'ils peuvent être sous forme anhydre ou hydratée.

D'une manière préférentielle, on met en oeuvre les métaux de terres rares sous la forme de leur oxyde, la plus courante c'est-à-dire sous la forme sesquioxyde.

Dans le procédé de l'invention Y₂0₃, La₂O₃, ^{Gd}₂⁰₃, ^{Yb}₂⁰₃, ^{Er}₂⁰₃ ou Ho₂O₃ ou Tm₂0₃ constituent des matières premières de choix.

En ce qui concerne les métaux alcalino-terreux, on peut également les mettre en oeuvre sous la forme de leur oxyde ou de leur hydroxyde, mais il est intéressant d'utiliser directement leurs sels, de préférence, nitrates ou chlorures.

D'une manière générale, il est souhaitable que toutes les matières premières choisies soient d'une très grande pureté de telle sorte qu'elles ne contiennent pas d'impuretés qui puissent se retrouver dans la substance luminescente et ainsi perturber son émission. Il est avantageux de mettre en jeu des matières premières présentant un degré de pureté supérieur à 99 %.

La première étape du procédé consiste à mettre en solution aqueuse les différents métaux utilisés. On emploie de l'eau permutée et, de préférence, de l'eau distillée.

Dans le cas des oxydes, leur mise en solution s'effectue par attaque en milieu acide. Ce milieu acide est constitué par des acides concentrés ou dilués, seuls ou en mélange. On met en oeuvre au moins un des acides suivants : l'acide nitrique, l'acide chlorhydrique, l'acide sulfurique, l'acide perchlorique, l'acide phosphorique. D'une manière préférentielle, on utilise l'acide nitrique.

Les conditions d'attaque varient selon la nature de l'acide, sa concentration et la température de réaction. On donne, à titre d'exemple, que l'on réalise l'attaque dans de bonnes conditions par l'acide nitrique, en introduisant à température ambiante (généralement 15 à 25°C) les oxydes des métaux de terres rares à raison de 0,1 à 2 moles/litre de chacun des métaux de terres rares exprimés en oxydes, dans une solution aqueuse contenant 30 à 60 % d'acide nitrique.

Dans le cas des sels de terres rares, on prépare une solution aqueuse contenant de 0,1 à 2 moles/litre de chacun des sels de terres rares exprimés en oxydes.

On réalise la préparation des solutions de sels anhydres ou hydratés de calcium et de baryum et/ou de strontium en dissolvant 0,1 à 0,2 mole desdits sels par litre de solution.

La proportion entre les métaux de terres rares et les métaux alcalino-terreux est calculée en fonction de la composition de la substance luminescente à obtenir.

On effectue ensuite la réaction de coprécipitation des différents métaux sous la forme de leur fluorure, par mélange de la solution des métaux des terres rares avec la solution des métaux alcalino-terreux et addition d'un agent de fluoration.

Pour ce qui est de l'agent de fluoration, on utilise l'acide fluorhydrique ou le fluorure d'ammonium qui sont mis en jeu sous forme d'une solution aqueuse ayant une concentration pondérale. de 10 à 60 %.

Le rapport entre la quantité d'ions fluorure et des différents métaux est au moins égal à ce qu'il sera dans le produit final. La quantité de l'agent de fluoration est au moins égale à la quantité stoechiométrique voire-même en léger excès pouvant atteindre 20 7 de la quantité stoechiométrique.

La réaction de coprécipitation est effectuée à une température qui peut varier dans de larges limites c'est-à-dire entre la température ambiante jusqu'à la température de reflux du mélange réactionnel. On choisit , de préférence, une température comprise entre 60°C et 95°C.

Il est souhaitable que l'enceinte réactionnelle soit chauffée à la température choisie avant introduction des solutions.

Le pH de la réaction de coprécipitation doit se situer entre 2,0 et 4,5 et il peut être nécessaire de l'ajuster dans cet intervalle par addition d'un agent basique, de préférence l'ammoniaque dont la concentration en solution aqueuse se situe le plus souvent entre 10 et 30 % en poids.

Une variante préférée du procédé de préparation consiste à réaliser une étape de mûrissement du coprécipité obtenu. A cet effet, on maintient la masse réactionnelle à une température comprise entre 60°C et 95°C pendant une durée variant de 1 à 48 heures.

On laisse ensuite le précipité décanter puis on effectue sa filtration et il est ensuite, de préférence, soumis à un ou plusieurs lavages à l'aide d'eau ou d'une solution aqueuse de fluorure d'ammonium ayant par exemple une concentration variant entre 0,1 et 0,5 g/1.

On répète les opérations de lavage jusqu'à ce que le pH des eaux de lavage soit compris entre 5,5 et 7, et de préférence aux environs de 6.

On soumet alors le coprécipité obtenu à une opération de séchage dont les conditions de réalisation ne sont pas critiques. Il peut être effectué à une température pouvant varier de 90°C à 250°C et sous une pression allant de 10⁻³mm de mercure jusqu'à la pression atmosphérique et, de préférence, choisie entre 10⁻³ et 12 mm de mercure. La durée du séchage est fonction de la température et de la pression. Le séchage dure jusqu'à obtention d'un poids constant de coprécipité.

Enfin, la dernière étape du procédé est le traitement thermique du coprécipité séché obtenu. Il est réalisé dans les mêmes conditions que celles définies pour la calcination directe du mélange de fluorures.

La température du traitement thermique varie entre 700°C et 1300°C et, de préférence, entre 700°C et 1000°C et une fois cette température atteinte, elle est maintenue entre 5 mn et 15 h.

Si l'on souhaite qu'il n'y ait présence que de fluorures dans le composé final, on effectue le traitement thermique soit sous courant gazeux d'acide fluorhydrique, soit sous atmosphère de gaz inerte et de préférence en présence d'un flux. Par contre, pour obtenir un composé final oxyfluoré, on soumet le coprécipité à un chauffage à l'air en présence d'un flux.

Une fois le traitement thermique terminé, on laisse refroidir le produit obtenu sous atmosphère inerte lorsque l'on ne souhaite pas la présence d'oxyfluorures.

Quel que soit le procédé d'obtention des composés précités on les soumet, généralement, après calcination, à une opération de broyage afin que le diamètre de leurs particules soit inférieur à 10 µm et, de préférence, inférieur à 5 um.

Le broyage peut être accompagné d'une opération de sélection granulométrique qui peut être réalisée simultanément ou successivement.

Le choix des substances luminescentes (A) et (B) constituant la composition de marquage de l'invention dépend des propriétés optiques que l'on souhaite obtenir.

Les impératifs précédemment définis au début de l'exposé de l'invention président au choix du couple (A) et (B).

On donne ci-après, des exemples d'associations de substances luminescentes (A) et (B) susceptibles de donner l'émission de la raie principale :
- dans le bleu :
   (A): - halogéno-silicate de baryum activé à l'europium divalent répondant à la formule (I)
   - oxysulfures de terres rares activés au terbium ou au thulium de formule (II)
(B): ; fluorures de terres rares activés au thulium répondant à la formule (X) dans laquelle a' est égal à 0.
   - fluorures mixtes de métaux alcalins ou alcalino-terreux et de terres rares activés au thulium
   - fluorures de métaux alcalino-terreux et de terres rares répondant à la formule (XII) dans laquelle a est égal à 0 et L est le thulium
- dans le vert :
   (A): - borate double de magnésium.et de terres rares répondant à la formule (III) ou (III')
      - phosphates de métaux alcalins et de terres rares répondant à la formule (IV) ou (IV')
      - thiogallates de métaux alcalino-terreux activés à l'europium divalent répondant à la formule (V)
      - oxysulfures de terres rares activés au terbium répondant à la formule (VI)
   (B): - fluorures de terres rares activés à l'erbium ou l'holmium répondant à la formule (X) dans laquelle a' est égal à 0
      - fluorures mixtes de métaux alcalins ou alcalino-terreux et de terres rares activés à l'erbium ou l'holmium
      - fluorures de métaux alcalino-terreux et de terres rares répondant à la formule (XII) dans laquelle a est égal à 0 et L est l'erbium ou l'holmium
- dans le .rouge :
   (A): - oxydes de terres rares activés à l'europium trivalent répondant à la formule (VIII)
      - vanadates de terres rares activés à l'europium trivalent répondant à la formule (IX)
      - oxysulfures de terres rares activés à l'europium ou au samarium trivalents répondant à la formule (VII)
   (B): - oxyfluorures de terres rares activés à l'erbium ou à l'holmium répondant à la formule (X) dans laquelle a' est supérieur à 0.
      - oxyfluorures de métaux alcalino-terreux et de terres rares répondant à la formule (XII) dans laquelle a est supérieur à 0 et L est l'erbium ou l'holmium.

La proportion de chaque substance (A) et (B) dans la composition de l'invention n'est pas critique et peut varier dans n'irpc=té quelle limite entre 0,1 et 99,9 %.

L'intensité relative des raies d'émission de chaque substance dépend de la proportion respective des substances (A) et (B) dans la composition de marquage.

Il est à remarquer que la composition de marquage est difficile à contrefaire compte-tenu du choix important qu'il existe de substances (A) et (B), de la nature complexe des substances mises en oeuvre et de la difficulté de la caractérisation des substances (A) et (B) puisque l'on a un mélange de substances.

Dans le cas d'une détection photomètrique, intervient également la proportion de chaque substance (A) et (B) ce qui implique encore un facteur supplémentaire à trouver.

Une application tout à fait adaptée aux compositions selon l'invention, consiste dans le marquage des documents dans le but soit de classement et de tri, soit de contrôle et prévention de la contrefaçon, la falsification, la perte, le vol ou l'abus de documents, informations enregistrées ou autres. Elles conviennent parfaitement bien pour le marquage de documents tels que billets de banque, chèques, papiers fiduciaires etc...

Les compositions de marquage selon l'invention peuvent être introduites sur ou dans le document à marquer. On peut par exemple les incorporer dans les encres d'imprimerie, dans ou sur le papier, dans ou sur les matières plastiques susceptibles de revêtir le document à identifier.

Elles peuvent être introduites dans le papier à moins que l'on préfère utiliser le procédé dit de couchage en incorporant ladite composition dans un liant transparent au rayonnement infra-rouge et au rayonnement ultraviolet que l'on dépose par enduction sur une partie ou sur toute la surface des feuilles de papier que l'on désire pouvoir authentifier de manière discrète par l'action des rayonnements infra-rouge et ultraviolet.

Les compositions de marquage de l'invention sont également bien adaptées à leur incorporation dans une matière plastique susceptible d'être moulée ou mise en forme par tout procédé connu.

On peut également réaliser l'enduction de la matière plastique à l'aide desdites compositions mises en oeuvre dans un liant transparent au rayonnement infra-rouge et au rayonnement ultraviolet.

Le procédé de vérification du document à authentifier mettant en oeuvre la composition de l'invention peut différer légèrement selon que le document est soumis à une détection visuelle ou automatique.

La détection visuelle qui est le plus souvent réalisée par le grand public pour s'assurer de la validité des billets de banque, des chèques etc... est basée sur le principe de la détection d'une couleur.

On envoie successivement dans n'importe quel ordre un rayonnement ultraviolet sur le document à vérifier puis un rayonnement infra-rouge.

Le document peut être considéré comme authentique si la lumière émise est de la même couleur dans les deux cas, par exemple, verte, bleue ou rouge.

L'appareil permettant cette vérification est relativement simple car il est constitué de deux sources émettrices des radiations d'excitation : le rayonnement ultraviolet est engendré par une lampe à ultraviolets telle qu'une lampe à vapeur de mercure dont la raie principale d'émission se situe à 254 nm ou 365 nm ou une lampe au deutérium à émission polychromatique dont on a éliminé le spectre visible à l'aide de filtres appropriés et le rayonnement infra-rouge peut être émis à l'aide d'une lampe génératrice de rayons infra-rouges, telle qu'une lampe à filament de tungstène à émission pclychromatique dont on a éliminé le spectre visible à l'aide de filtres appropriés ou à l'aide d'une photodiode en arséniure d_{E} gallium émettant une radiation à 980 nm.

Dans le cas d'une détection photomètrique, effectuée par des spécialistes tels que banques, ... on envoie de la même façon sur le document à authentifier dans un ordre quelconque un rayonnement ultraviolet (ou un rayonnement X) et un rayonnement infra-rouge ; chacune des radiations émises dans le visible est détectée et enregistrée sous la forme de son spectre d'émission ce qui permet de quantifier l'émission des deux substances luminescentes (A) et (B) contenues dans la composition de l'invention.

On peut alors utiliser comme clé d'identification :
1 - soit la position de la raie ou des raies d'émission dans le spectre visible émises par la substance luminescente (A) sous excitation ultraviolette (ou X) et par la substance luminescente anti-stokes (B) sous excitation infra-rouge Afin de pouvoir effectuer une détection automatique des raies principales émises par chaque substance, il est nécessaire que les substances (A) et (B) soient choisies de telle sorte que leurs raies principales d'émission respectives soient séparées d'au moins 0,5 nm.
2 - soit l'intensité relative des raies d'émission obtenues sous excitation ultraviolette (ou X) et excitation infra-rouge. Pour un couple donné de substances (A) et (B), on a des intensités d'émission qui diffèrent selon la proportion de chaque substance dans la composition de l'invention à tel point que l'on peut inverser le rapport entre les intensités d'émission de chaque substance. Il en découle que, à l'aide de deux substances (A) et (B), on peut avoir une multitude de clés différentes.
3 - on peut également ajouter des clés supplémentaires d'identification en faisant intervenir des raies d'émission secondaires situées à des longueurs d'onde différentes de la raie principale.

Pour être authentifié, le document devra être caractérisé par une raie d'émission principale d'intensité donnée située à une longueur d'onde donnée pour chaque substance luminescente (A) et (B) et aussi une ou plusieurs raies d'émission secondaires d'intensité donnée situées à des longueurs d'onde différentes émises par la substance luminescente (A) et/ou la substance luminescente anti-stokes (B).

Le système de marquage peut alors devenir très sophistiqué interdisant ainsi tous les risques de contrefaçon et de falsification.

Lorsque la détection est réalisée à l'aide d'un appareillage, il y a lieu de prévoir des sources émettrices des rayonnerrents excitateurs et des dispositifs de détection et de quantification.

L'émission du rayonnement provient des sources précédemment décrites : lampes pour le rayonnement ultraviolet, lampes ou photodiodes pour le rayonnement infra-rouge.

La détection de la lumière visible est faite au moyen de photodétecteurs, par exemple, photodiodes ou photomultiplicateurs qui seront adaptés à la détection des longueurs d'onde mises en oeuvre.

La recherche de l'émission caractéristique est réalisée à l'aide d'un monochromateur centré sur la ou les longueurs d'onde à repérer.

La présente invention va être maintenant illustrée, à titre non limitatif, en donnant deux exemples de composition de marquage selon l'invention.

Par ailleurs, les données des dessins annexés ci-après sont les suivantes :
- la figure 1 représente le diagramme de phase ternaire A,B,C représentant la composition de substances luminescentes susceptibles d'être utilisées en tant que substance luminescente (B).
- les figures (2) et (3) montrent le spectre d'émission des compositions de marquage selon l'invention définies dans les exemples 1 et 2.

On précisera que dans ces figures, l'axe des abcisses représente des longueurs d'onde exprimées en nanomètres et l'axe des ordonnées représente l'intensité d'émission des substances luminescentes exprimée en unités arbitraires.

Avant de détailler la préparation des compositions de marquage selon l'invention et leurs propriétés optiques, on précisera les modes d'obtention des substances luminescentes (A) et (B).

### EXEMPLE 1 -

### 1) Préparation de la substance luminescente (A) répondant à la formule :

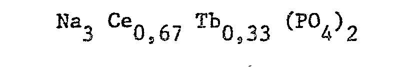

Elle est effectuée conformément à l'exemple 1 décrit dans le brevet français 2 391 260.

### 2) Préparation de la substance luminescente anti-stokes (B) répondant à la formule :

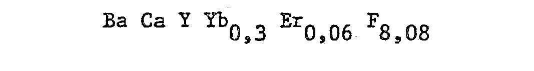

Elle est préparée à partir des matières premières suivantes :
- 5,7299 g d'oxyde d'yttrium Y203 ayant une pureté de 99,9999 %
- 2,9621 g d'oxyde d'ytterbium Yb₂0₃ ayant une pureté de 99,9 %
- ₀,₅₇₄₇ g d'oxyde d'erbium Er₂0₃ ayant une pureté de 99,99 %
- 13,0675 g de nitrate de baryum Ba(NO₃)₂
- 11,8075 g de nitrate de calcium Ca(NO₃)₂, 4 H₂O

On prépare la solution nitrique des métaux de terres rares par dissolution des différents oxydes de terres rares dans 25 cm^{s} d'acide nitrique concentré (60 %) et environ 20 cm³ d'eau distillée.

On prépare par ailleurs une solution des nitrates de métaux alcalino-terreux en les dissolvant dans environ 130 cm³ d'eau distillée.

Dans un réacteur de précipitation en verre, équipé d'un système d'agitation et d'un thermomètre, et préalablement chauffé à 85°C par l'intermédiaire d'un bain thermostaté, on introduit successivement les deux solutions précitées. On ajoute progressivement, sous agitation constante, 30 cm³ d'une solution aqueuse à 40 % d'acide fluorhydrique (99,9 % de pureté). Après 15 minutes d'agitation, on ajoute 50 cm³ d'une solution aqueuse à 20 % d'ammoniaque de façon à amener le pE à 2,5.

On maintient la masse réactionnelle à la température de 85°C pendant 10 heures sous agitation afin de réaliser le mûrissement du coprécipité.

On laisse décanter environ une heure, puis on filtre le coprécipité sur un filtre sous pression d'azote (2 atnosphères). On réalise le lavage du coprécipité à l'aide de 6 fois 100 cm³ d'une solution aqueuse de fluorure d'ammonium NH₄F à 0,25 g/1, de façon à ce que le pH des eaux de lavage soit de 6.

On soumet le coprécipité obtenu à une opération de séchage à 100°C dans une étuve sous pression réduite (= 10⁻² mm de mercure) pendant 10 heures. On obtient 24 g de coprécipité séché.

On mélange de manière homogène dans un mortier d'agate automatique les 24 g de coprécipité avec 7,2 g de dihydrogénofluorure d'ammonium NH₄F, HF. On introduit ensuite ce mélange dans un creuset d'alumine couvert placé dans un four tubulaire dans lequel on établit un balayage d'argon séché et désoxygéné. On monte la température jusqu'à 250°C et on la maintient pendant 2 heures. Ensuite on augmente la température jusqu'à 810°C à raison de 200°C/heure. On maintient cette température pendant 10 heures. On laisse refroidir le produit calciné sous atmosphère d'argon.

On obtient 24 g d'un produit :

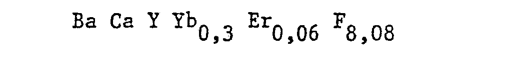

On caractérise la structure cristalline du produit obtenu selon la méthode de Debye-Scherer en transmission en utilisant le rayonnement monochromatique du molybdène ou du cuivre.

Le produit (B) a une phase prépondérante de type K Y₂ F₇ et une autre phase de type y ^{K} Yb₃ F₁₀.

### 3) Préparation de la composition de marquage de

### l'invention (M ) :

Dans un mortier automatique en agate, on mélange intimement :
- 9,0 g de la substance luminescente (A)
- 1,0 g de la substance luminescente anti-stokes (B) L'opération de mélange dure 30 minutes.

On obtient donc une composition de marquage contenant 90 % de substance luminescente (A) et 10 % de substance luminescente anti-stokeç (B).

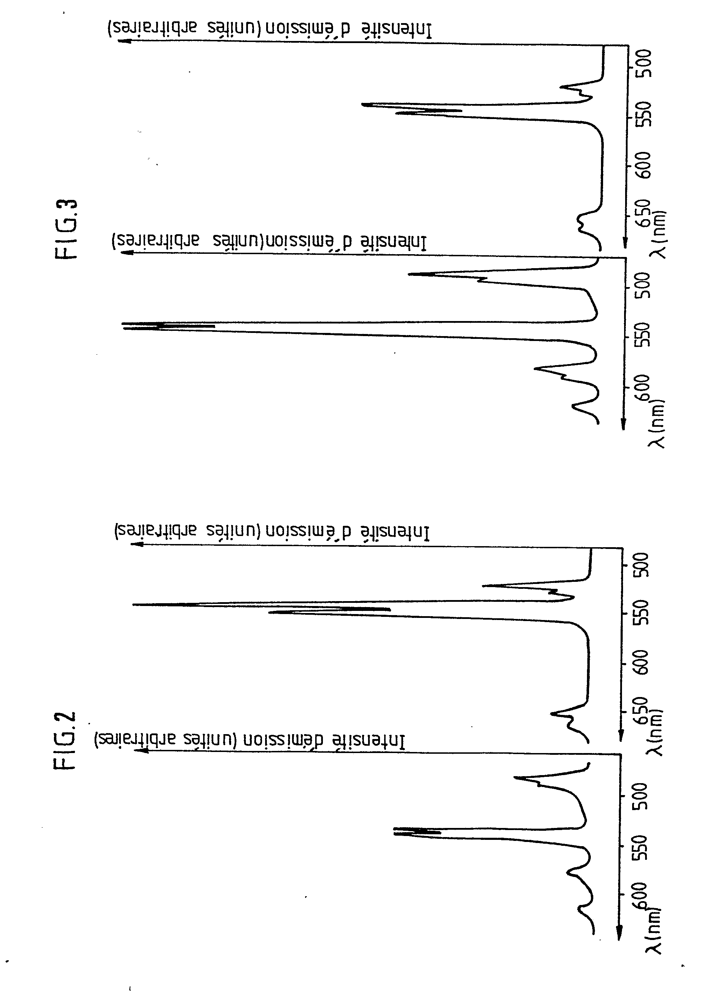

On enregistre deux spectres d'émission de la composition . de marquage ainsi obtenue
- l'un est obtenu par excitation infra-rouge de la substance luminescente anti-stokes (B) contenue dans la composition de l'invention à l'aide d'une lampe à filament de tungstène (lampe PHILIPS réf. 13 481) dont on a éliminé le spectre visible à l'aide de filtres appropriés (filtres MTO SPECIVEX DJ 8456 + J 820 a) et par détection du rayonnement émis au moyen d'un photomultiplicateur (HAMAMATSU R 136) sensible dans le visible ; le rayonnement étant analysé à l'aide d'un monochromateur BAUSCH' 1 LOMB CAT 33-8645₉
Ce spectre correspond à celui donné à droite de la figure 2.
- l'autre est obtenu par excitation ultraviolette de la substance luminescente (A) contenue dans la composition de l'invention à l'aide d'une lampe à vapeur de mercure basse pression dont la longueur d'onde d'émission principale est située à 254 nm ; la détection du rayonnement visible émis est réalisée de manière identique.

Ce spectre correspond à celui donné à gauche de la figure 2.

On note que la raie d'émission principale de la substance luminescente (A) est située à 545 nm ce qui correspond à une émission dans le vert et celle de la substance luminescente anti-stokes (B) est située à 548 nm ce qui correspond également à une émission dans le vert.

Si l'on compare les émissions respectives de chaque substance on peut dire que l'intensité de la raie d'émission de la substance luminescente anti-stokes (B) est nettement supérieure à celle de la substance luminescente (A).

Dans le cas d'une détection visuelle, on note quelle que soit l'excitation, l'émission d'une couleur verte due essentiellement à la contribution des raies principales à l'émission des substances luminescentes (A) et (B) intervenant dans la composition de marquage de l'invention.

### EXEMPLE 2 -

### Préparation d'une composition de marquage de l'invention (M₂) :

D'une manière identique à l'exemple 1, on prépare une composition de marquage contenant 10 % de substance luminescente (A) et 90 % de substance luminescente anti-stokes (B).

Les spectres d'émission enregistrés sous excitations infra-rouge et ultraviolette sont donnés à la figure 3 : le spectre de la substance luminescente anti-stokes (B) est à droite de la figure 3 et le spectre de la substance luminescente (A) est à gauche..

On obtient les mêmes raies principales d'émission dans le vert mais l'on remarque que le rapport des intensités relatives est inversé: l'intensité d'émission de la substance luminescente (A) devenant supérieure à celle de la substance luminescente anti-stokes (B).

Lors d'un examen visuel, on note comme dans l'exemple 1 une étission dans le vert quelle que soit l'excitation des substances luminescentes.

## Revendications

1 - Composition destinée au marquage des documents caractérisée par le fait qu'elle comprend :
- une substance luminescente (A) susceptible, lorsqu'elle est excitée par un rayonnement de longueur d'onde inférieure à 400 nm, d'émettre une radiation ayant une longueur d.'onde comprise entre 400 et 800 nm et
- une substance luminescente dite anti-stokes (B) susceptible, lorsqu'elle est excitée par un rayonnement de longueur d'onde supérieure à 800 nm, d'émettre une radiation ayant une longueur d'onde comprise entre 400 et 800 nm.

2 - Composition selon la revendication 1 caractérisée par le fait que les deux substances luminescentes doivent émettre chacune un spectre d'émission dans la même région du spectre électromagnétique et présenter un spectre étroit c'est-à-dire qu'il doit. être défini par un intervalle de longueur d'onde inférieur à 50 nm.

3 - Composition selon la revendication 2 caractérisé par le fait que les deux substances luminescentes doivent émettre chacune un spectre d'émission dans la même région du spectre électromagnétique et présenter un spectre étroit c'est-à-dire qu'il doit être défini par un intervalle de longueur d'onde inférieur à 30 nm.

4 - Composition selon l'une des revendications 1 à 3 caractérisée par le fait que les deux substances luminescentes émettent une ou plusieurs raies fines dans la même région étroite du spectre électromagnétique. 5- Composition selon l'une des revendications 1 à 4 caractérisée par le fait que les deux substances luminescentes présentent au moins une raie d'émission : ces raies d'émission pouvant se situer à la même longueur d'onde ou à une longueur d'onde voisine lors d'une détection visuelle ou dans un intervalle d'au moins 0,5 nm afin qu'elles soient discriminées dans le cas d'une détection photométrique.

6 - Composition selon l'une des revendications 1 à 5 caractérisée par le fait que la substance luminescente (A) est un halogéno-silicate de baryum activé à l'europium divalent répondant à la fomrmule (1) _{:} 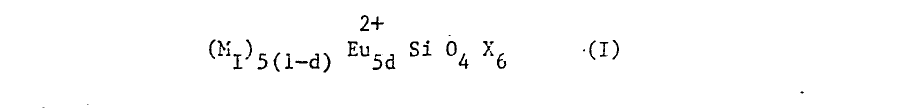 dans laquelle :
⁻ M_{I} représente Ba₁₋ₑ Srₑ ou Ba₁₋ₑ Caₑ, e étant supérieur ou égal à 0 et inférieur ou égal à environ 0,1,
- d est supérieur à 0 et inférieur ou égal à environ 0,2,
- X représente Cl_{1-f} Br_{f} ; f étant supérieur ou égal à 0 et inférieur ou égal à environ 1.

7 - Composition selon l'une des revendications 1 à 5 caractérisée par le fait que la substance luminescente (A) est un oxysulfure de terres rares activé au terbium ou au thulium répondant à la formule (II) : 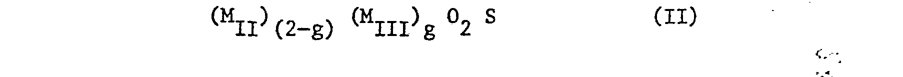 dans ladite formule :
- M_{II} est au moins un élément du groupe comprenant l'yttrium, le lanthane, le gadolinium et le lutécium,
- M_{III} représente le terbium ou le thulium - g est compris entre 0,0002 et 0,02

8 - Composition selon l'une des revendications 1 à 5 caractérisée par le fait que la substance luminescente (A) est Ba F Cl activé à l'europium, La 0 Br activé au thulium, La 0 Br activé au terbium.

9 - Composition selon l'une des revendications 1 à 5 caractérisée par le fait que la substance luminescente (A) est un borate double de magnésium et de terres rares répondant à la formule (III): 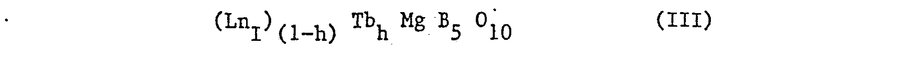 dans laquelle Ln représente au moins un élément pris dans le groupe constitué par les lanthanides et l'yttrium et dans laquelle h est supérieur à 0 et inférieur ou égal à 1.

10 - Composition selon la revendication 9 caractérisée par le fait que la substance luminescente (A) répond à la formule (III') : 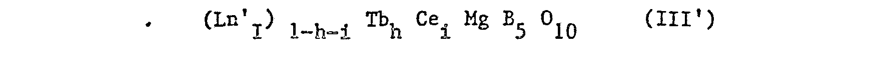 où Ln'_{I} représente au moins un élément pris dans le groupe constitué par le llanthane, le gadolinium, le lutécium et l'yttrium et dans laquelle h est supérieur à 0 et inférieur ou égal à 1 et i est supérieur à 0 et inférieur ou égal à 1.

11 - Composition selon l'une des revendications 1 à 5 caractérisée par le fait que la substance luminescente (A) est un phosphate de métaux alcalins et de terres rares répondant à la formule (IV) : 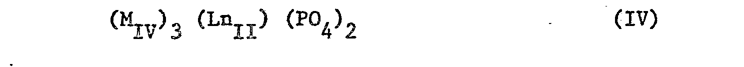 dans laquelle :
M_{IV} est au moins l'un des éléments choisi parmi le groupe constitue par le sodium, le potassium, le rubidium et le césium ;
Ln_{II} est au moins l'un des éléments choisi parmi le groupe constitué par le cérium et le terbium.

12 - Composition selon la revendication 11 caractérisée par le fait que la substance luminescente (A) répond à la formule (IV') : 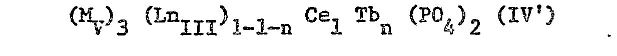 dans laquelle
M_{V} représente le sodium, le potassium, le rubidium ou un mélange d'entre eux
Ln_{III} représente l'yttrium, le lanthane, le gadolinium
1 + n étant compris entre 0 et 1.

13 - Composition selon l'une des revendications 1 à 5 caractérisée par le fait que la substance luminescente (A) est un thiogal- late de métaux alcalino-terreux activé à l'europium divalent répondant à la formule (V) : 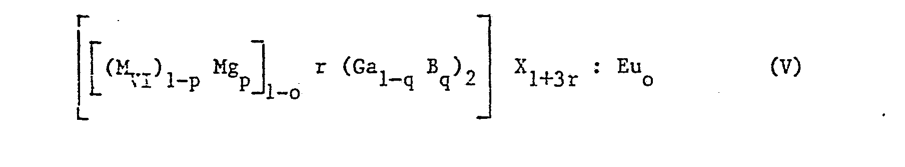 dans laquelle :
M_{VI} représente au moins un élément alcalino-terreux choisi parmi le groupe comprenant le calcium, le strontium et le baryum
p est supérieur ou égal à 0 et inférieur ou égal à 0,7 environ r est supérieur ou égal à 0,8 environ et est différent de 1 quand p = 0
q est supérieur ou égal à 0 et inférieur à p.
X représente le soufre ou un mélange de soufre et d'oxygène o est un nombre choisi de manière à produire la luminescence recherchée quand la substance luminescente est soumise à une énergie incidente excitatrice.

14 - . Composition selon l'une des revendications 1 à 5 caractérisée par le fait que la substance luminescente (A) est un oxysulfure de terres rares activé au terbium répondant à la formule (VI) : 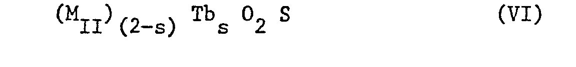 dans laquelle :
M_{II} est au moins un élément du groupe comprenant l'yttrium, le lanthane, le gadolinium et le lutécium
s est compris entre 0,02 et 0,2

15 - Composition selon l'une des revendications 1 à 5 caractérisée par le fait que la substance luminescente (A) est un oxysulfure de terres rares activé à l'europium ou au samarium trivalent répondant à la formule (VII) : 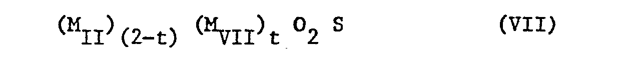 dans laquelle :
M_{II} est au moins un élément pris dans le groupe comprenant l'yttrium, le lanthane, le gadolinium et le lutécium
M_{VII} représente l'europium ou le samarium trivalent
t est compris entre 0,0002 et 0,2 pour le samarium et entre . 0,005 et 0,5 pour l'europium.

16 - Composition selon l'une des revendications 1 à 5 caractérisée par le fait que la substance luminescente (A) est un oxyde de terres rares activé à l'europium trivalent répondant à la formule (VIII) : 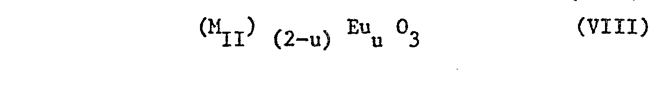 dans laquelle :
M_{II} représente au moins l'un des éléments : yttrium, lanthane, gadolinium ou lutécium,
u est compris entre 0,0002 et 0,2.

17 - Composition selon l'une des revendications 1 à 5 caractérisée par le fait que la substance luminescente (A) est un vanadate de terres rares de formule (IX) : 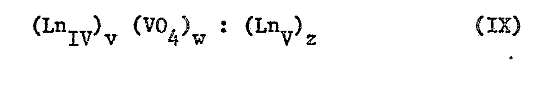 dans laquelle :
Ln_{IV} représente l'yttrium, le lanthane, le gadolinium ou leur mélange
Ln_{V} représente l'europium trivalent éventuellement en mélange avec une autre terre rare trivalente choisie dans le groupe formé par : le cérium, le praséodyme, le néodyme, le samarium, le gadolinium, le terbium, le dysprosium, l'holmium, l'erbium, le thulium, l'ytterbium et le lutécium
v + z = w : z varie de 0,01 à 0,2 par mole de vanadate.

18 - Composition selon l'une des revendications 1 à 5 caractérisée par le fait que la substance luminescente (A) est constituée d'un tungstate double de métal alcalin et d'ytterbium dopé par un tungstate double d'un métal alcalin et d'erbium ou d'un tungstate double d'un métal, alcalin et d'ytterbium faiblement dopé par un tungstate double d'un métal alcalin et de thulium.

19 - Composition selon l'une des revendications 1 à 5 caractérisée par le fait que la substance luminescente (B) est un oxychlorure d'yttrium dopé à l'ytterbium et à l'erbium.

20 - Composition selon l'une des revendications 1 à 5 caracté-. risée par le fait que la substance luminescente (B) est un fluorure de terres rares répondant à la formule (X) : 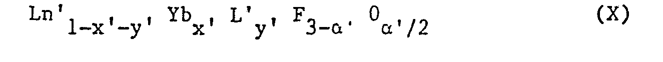 dans laquelle :
Ln' est l'un des métaux suivants : yttrium, lanthane, lutécium ou gadolinium
L' est l'un des ions activateurs : erbium, holmium, thulium x' est compris entre 0,04 et 0,40
y' est compris entre 0,001 et 0,10.
a' est compris entre 0 et 3.

21 - . Composition selon l'une des revendications 1 à 5 caractérisée par le fait que la substance luminescente (B) est un fluorure de métaux alcalins et de terres rares répondant à la formule (XI) : 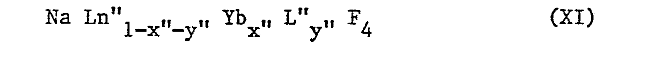 dans laquelle :
Ln" représente au moins l'yttrium, le lanthane, le lutécium ou le gadolinium
L" est l'un des éléments erbium, holmium ou thulium
x" varie entre 0,02 et 0,60
y" varie entre 0,00005 et 0,20.

22 - Composition selon l'une des revendications 1 à 5 caractérisée par le fait que la substance luminescente (B) est un fluorure mixte de baryum et d'yttrium, de baryum et de lanthane dopé par l'ytterbium et l'erbium ou l'holmium ou le thulium.

23 - Composition selon l'une des revendications 1 à 5 caractérisée par le fait que la substance luminescente (B) est un composé ternaire dont la composition peut être représentée à l'intérieur du diagramme de phase ternaire A, B, C dans lequel :
A représente un fluorure, un oxyde ou un oxyfluorure mixte de métaux de terres rares symbolisé par la formule ^{Ln} F_{3-α} 0 _{α/2 -} dans laquelle :
. α est supérieur ou égal à 0 et inférieur ou égal à 3
. Ln représente :
- au moins un élément terre rare TR choisi dans le groupe formé par l'yttrium, le lanthane, le cérium,
le gadolinium, le lutécium, le thorium
- et l'ytterbium
- et un élément L choisi dans le groupe formé par l'erbium, l'holmium et le thulium
B représente le fluorure de baryum
C représente un fluorure de métal alcalino-terreux de formule Ca_{1-B} Sr F2 dans laquelle est supérieur ou égal à 0 et inférieur ou égal à 1..
ledit composé étant représenté dans le diagramme par la formule (A)ₐ (B)_{b} (C)_{c} dans laquelle a, b, c sont des nombres positifs quelconques tels que l'on conserve les propriétés de luminescence anti-stokes de ces substances.

24 - Composition selon la revendication 23 caractérisée par le fait que dans le diagramme de phase ternaire A, B, C de la substance luminescente (B), B est le fluorure de baryum C est le fluorure de calcium ; et A est un fluorure mixte d'yttrium, d'ytterbium et d'erbium ou d'holmium ou de thulium.

25 - Composition selon l'une des revendications 23 et 24 caractérisée par le fait que dans la formule (A) (B)_{b} (C)_{c} de la substance luminescente (B), a est supérieur du égal à 1 et inférieur ou égal à 2 : b et c étant supérieurs à 0 et inférieurs à 2 et leur somme b + c est égale à 2.

26 - Composition selon l'une des revendications 23 à 25 caractérisée par le fait que a est supérieur ou égal à 1 et inférieur ou égal à 2 : b et c étant égaux à 1. 27 - Composition selon l'une des revendications 23 à 26 caractérisée par le fait que dans le diagramme de phase ternaire A, B, C de la substance luminescente (B), A est symbolisé par la formule suivante : 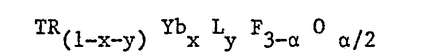 dans laquelle x est supérieur à 0 et inférieur à 0,5 et y est supérieur à 0 et inférieur ou égal à 0,1 ; y doit être inférieur à x ; a est supérieur ou égal à 0 et inférieur ou égal à 3.

28 - Composition selon la revendication 27 caractérisée par le fait que dans la formule de la phase A, x est compris entre 0,1 et 0,2 ; y est compris entre 0,02 et 0,04 ; a est supérieur ou égal à 0 et inférieur ou égal à 3.

29 - Composition selon l'une des revendications 27 et 28 caractérisée par le fait que dans la formule de la phase A, a est égal à 0.

30 - Composition selon l'une des revendications 1 à 5, 23 à 29 caractérisée par le fait que la substance luminescente (E) est un fluorure de métaux alcalino-terreux et de terres rares répondant à la formule (XII) : 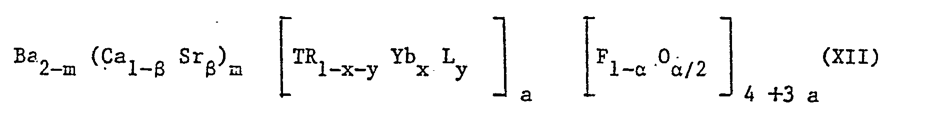 dans laquelle :
- m est supérieur à 0 et inférieur à 2.
- a est supérieur ou égal à 0 et inférieur ou égal à 3.
- S est supérieur ou égal à 0 et inférieur ou égal à 1.
- a est supérieur ou égal à 1 et inférieur ou égal à 2.
- x est supérieur à 0 et inférieur à 0,5
- y est supérieur ou égal à 0 et inférieur ou égal à 0,1 : y étant inférieur à x
- TR, L ayant la signification donnée précédemment.

31 - Composition selon la revendication 30 caractérisée par le fait que la substance luminescente (B) est un composé qui répond à la formule (XII) dans laquelle a est égal à 1 ou 2.

32 - Composition selon l'une des revendications 1 à 5 caractérisée par le fait qu'elle est susceptible d'émettre dans le bleu lorsqu'elle est constituée par les substances luminescentes (A) et (B) choisies respectivement dans les groupes formés par :
(A): - halogéno-silicate de baryum activé à l'europium divalent répondant à la formule (I) - oxysulfures de terres rares activés au terbiun ou au thulium de formule (II)
(B): - fluorures de terres rares activés au thulium répondant à la formule (X) dans laquelle a' est égal à 0. - fluorures mixtes de métaux alcalins ou alcalino-terreux et de terres rares activés au thulium - fluorures de métaux alcalino-terreux et de terres rares répondant à la formule (XII) dans laquelle a est égal à 0 et L est le thulium

33 - Composition selon l'une des revendications 1 à 5 caractérisée par le fait qu'elle est susceptible d'émettre dans le vert lorsqu'elle est constituée par les substances luminescentes (A), et (B) choisies respectivement dans les groupes suivants :
(A): - borate double de magnésium et de terres rares répondant à la formule (III) ou (III') - phosphates de métaux alcalins et de terres rares répondant à la formule (IV) ou (IV') - thiogallates de métaux alcalino-terreux activés à l'europium divalent répondant à la formule (V) - oxysulfures de terres rares activés au terbium répondant à la formule (VI)
(B): - fluorures de terres rares activés à l'erbium ou l'holmium répondant à la formule (X) dans laquelle α est égal à 0 - fluorures mixtes de métaux alcalins ou alcalino-terreux et de terres rares activés à l'erbium ou l'holmium - fluorures de métaux alcalino-terreux et de terres rares répondant à la formule (XII) dans laquelle a est égal à 0 et L est l'erbium ou l'holmium.

34 - Composition selon l'une des revendications 1 à 5 caractérisée par le fait qu'elle est susceptible d'émettre dans le rouge lorsqu'elle est constituée par les substances luminescentes (A) et (B) choisies respectivement dans les groupes suivants :
(A): - oxydes de terres rares activés à l'europium trivalent répondant à la tormule (VIII) - vanadates de terres rares activés à l'europium trivalent répondant à la formule (IX) - oxysulfures de terres rares activés a l'europium ou au samarium trivalents répondant à la formule (VII)
(3): - oxyfluorures de terres rares activés à l'erbium ou à l'holmium répondant à la formule (X) dans laquelle α' est superieur à 0. - oxyfluorures de métaux alcalino-terreux et de terres rares répondant à la formule (XII) dans laquelle α est supérieur à 0 et L est l'erbium ou l'holmium.

35 - Composition selon l'une des revendications 1 à 34 caractérisée par le fait que la proportion de chaque substance lu=inescente (A) et (B) peut varier entre 0,1 et 99,9 %.

36 - Procédé de vérification du document à authentitier à l'aide de la composition de marquage décrite dans l'une des revendications 1 à 35 caractérisé par le fait qu'il consiste dans le cas d'une détection visuelle a envoyer successivement sur ledit document dans un ordre quelconque un rayonnement ultraviolet (ou X) et un rayonnement intra-rouge et à vérifier que l'émission des substances luminescentes (A) et (B) de la composition de marquage est dans les deux cas, de la même couleur.

37 - Procède selon la revendication 3b caractérisé par le fait qu'il consiste à envoyer successivement sur ledit document dans un orcre quelconque un rayonnement ultraviolet (ou X) et un rayonnement infra-rouge ; à détecter et à enregistrer chacune des radiations émises dans le visible sous la forme de son spectre d'émission et à identifier ledit document à l'aide des clés suivantes :

1 - soit la position de la raie ou des raies d'émission dans le spectre visible émises par la substance luminescente (A) sous excitation ultraviolette (ou X) et par la substance luminescente anti-stokes (B) sous excitation infra-rouge et/ou
2 - soit l'intensité relative des raies d'émission obtenues sous excitation ultraviolette (ou X) et excitation infra-rouge et/ou
3 - soit la position des raies d'émission secondaires situées à des longueurs d'onde différentes de la raie principale.
